# NEUE EUROPÄISCHE PATENTSCHRIFT

(11) **EP 0 607 601 B2**
(45) Veröffentlichungstag und Bekanntmachung des Hinweises auf die Entscheidung über den Einspruch: **26.07.2000**
(45) Hinweis auf die Patenterteilung: 29.01.1997
(21) Anmeldenummer: 93120763.3
(22) Anmeldetag: 23.12.1993
(51) Int. Cl.: B01J 8/44

(54) **Wirbelschichtreaktor mit Düsenrost**
Fluidised bed reactor having a nozzle grating
Réacteur à lit fluidifié pourvu d'une grille à buse

(30) Priorität: 20.01.1993 DE 4301365
(43) Veröffentlichungstag der Anmeldung: 27.07.1994
(73) Patentinhaber: Metallgesellschaft Aktiengesellschaft, 60325 Frankfurt am Main (DE)
(72) Erfinder: Lewandowski, Wladyslaw, D-65824 Schwalbach (Taunus) (DE); Emmel, Jürgen, D-64584 Biebesheim (DE); Scheler, Wolfgang, D-61352 Bad Homburg (DE)

(56) Entgegenhaltungen:
- EP-A- 0 019 422
- EP-A- 9 922 913
- DE-A- 3 343 480
- DE-A- 3 437 486
- DE-B- 1 065 383
- US-A- 2 628 158
- US-A- 3 892 046

## Beschreibung

Die Erfindung betrifft einen Wirbelschichtreaktor mit einem im unteren Bereich des Reaktorgehäuses angeordneten Düsenrost zum Einführen von Fluidisierungsmedium in den Reaktor, wobei der Düsenrost mehrere, etwa horizontal verlaufende Rohre mit Düsen für den Durchtritt des Fluidisierungsmediums aufweist, zu einem Rohr mindestens eine Öffnung im Reaktorgehäuse gehört und mit der Öffnung ein das Rohr umgebender Rohrstutzen verbunden ist, mit welchem das Rohr lösbar verbunden ist und der das Rohr stützt, wenn man es um seine Längsachsedreht.

Wirbelschichtreaktoren dieser Art sind aus DE-B-1 065 383 bekannt. Hierbei sind die Düsen als Öffnungen in den Rohren ausgebildet. Ähnliche Rohre mit Öffnungen sind aus US-A-2 682 158 und EP-A-0 019 422 bekannt. Der Erfindung liegt die Aufgabe zugrunde, den Düsenrost wartungsfreundlich auszubilden und dabei auch ein bequemes Auswechseln der Düsen zu ermöglichen. Beim eingangs genannten Wirbelschichtreaktor wird die Aufgabe erfindungsgemäß durch die Merkmale des Kennzeichens des Patentanspruchs gelöst.

Durch die erfindungsgemäße Ausbildung der Rohre und durch die Stützvorrichtung wird es möglich, bei Montage- und Wartungsarbeiten die Düsen auf einfache Weise nicht nur von oben, sondern auch von unten her zu erreichen. Üblicherweise werden die lösbaren Verbindungen zwischen den Rohren und dem Reaktorgehäuse als Schraubverbindungen ausgebildet, doch sind auch andere lösbare Verbindungen, z.B. Klemmverbindungen, möglich.

Ausgestaltungsmöglichkeiten des Wirbelschichtreaktors werden mit Hilfe der Zeichnung erläutert. Es zeigt:
Fig. 1 den Wirbelschichtreaktor im Längsschnitt in schematischer Darstellung,
Fig. 2 einen horizontalen Schnitt nach der Linie II-II in Figur 1 und
Fig. 3 einen senkrechten Schnitt nach der Linie III-III in Figur 2 durch den Bereich einer Öffnung im Reaktorgehäuse.

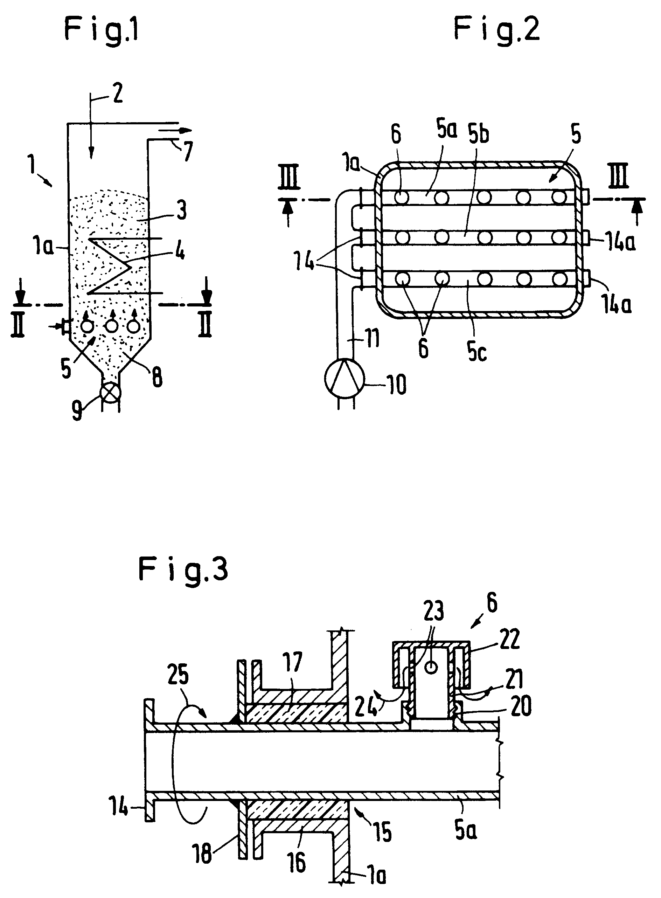

Der Wirbelschichtreaktor (1) der Figur 1 kann verschiedenen Zwecken dienen, z. B. der thermischen Behandlung, insbesondere dem Kühlen oder Erhitzen körniger Feststoffe, die durch die Leitung (2) zugeführt werden. Im Reaktor befindet sich ein Wirbelbett (3), das von aufwärts strömendem Fluidisierungsmedium bewegt wird. Ein Rohrleitungssystem (4) wird in an sich bekannter Weise von einem Heizungs- oder Kühlfluid durchströmt, um Wärme zu- oder abzuführen. Das Reaktorgehäuse (1a) weist im unteren Bereich einen Düsenrost (5) auf, der aus parallelen Rohren (5a), (5b) und (5c) besteht, die mit zahlreichen Düsen (6) bestückt sind, vgl. insbesondere Figur 2.

Fluidierungsmedium, z. B. Wasserdampf oder ein beliebiges Gas oder Gasgemisch, wird von außen unter Druck dem Düsenrost (5) zugeführt, tritt durch die Düsen (6) aus und strömt aufwärts durch das Wirbelbett (3). Gase und Dämpfe werden durch den Abzugskanal (7) entfernt. Behandelte Feststoffe fallen durch den Düsenrost (5) in den darunter befindlichen Sammelbunker (8) und werden durch eine Schleusenvorrichtung (9) nach unten abgezogen.

Figur 2 zeigt in schematischer Darstellung eine Sicht von oben auf den Düsenrost (5). Das Fluidisierungsmedium wird von außen durch den Verdichter (10) angesaugt und zunächst in die Hauptleitung (11) gedrückt. Von der Hauptleitung (11) strömt das Fluidisierungsmedium in die Rohre (5a), (5b) und (5c) und tritt durch deren Düsen (6) hindurch in das Wirbelbett (3) aus. In Figur 2 sind die lösbaren Flanschverbindungen (14) zwischen den Enden der Rohre (5a) bis (5c) und der Hauptleitung (11) angedeutet; die lösbare Befestigung der Rohre am Reaktorgehäuse (1a) wurde in Figur 2 aber der besseren Übersichtlichkeit wegen weggelassen.

Einzelheiten der lösbaren Befestigung zwischen einem Rohr (5a) und dem Reaktorgehäuse (1a) sind in Figur 3 dargestellt. Im Bereich der Gehäuseöffnung (15) ist mit dem Reaktorgehäuse ein Rohrstutzen (16) verbunden, wobei zwischen dem Stutzen und dem Rohr (5a) eine Abdichtung (17) angeordnet ist. Als Abdichtung kommt z.B. eine Stopfbuchse in Frage. Am Rohr (5a) ist eine Ringscheibe (18) angeschweißt, die mit dem Rohrstutzen (16) in nicht dargestellter Weise, z.B. durch Schraubbolzen, lösbar verbunden ist. In analoger Weise kann die Verbindung zwischen dem anderen, geschlossenen Ende (14a) der Rohre mit dem Gehäuse (1a) ausgebildet sein.

In Figur 3 ist eine Düse (6) dargestellt, die mit dem Rohr (5a) lösbar verbunden ist. Zu diesem Zweck weist das Rohr einen Gewindering (20) auf, in den die Düse mit ihrem Fuß (21) eingeschraubt ist. Der Fuß (21) ist als Rohrstück ausgebildet, das am oberen Ende durch eine Kappe (22) abgeschlossen ist. Der Fuß weist Löcher (23) auf, durch die das Fluidisierungsmedium auf dem durch den Pfeil (24) angedeuteten Weg in das Wirbelbett (3) austritt.

Für Montage- oder Wartungsarbeiten kann eine Bedienungsperson von unten, d.h. vom Sammelbunker (8) aus (vgl. Figur 1) die nach unten gedrehten Düsen erreichen. Zu diesem Zweck wird das zugehörige Rohr (5a) durch Lösen der Verbindung (14) zur Hauptleitung (11) und durch Lösen der Verbindung zwischen der Ringscheibe (18) und dem Rohrstutzen (16) drehbar gemacht. Man dreht das so beweglich gemachte Rohr (5a) um seine Längsachse, wie das in Figur 3 durch den gebogenen Pfeil (25) angedeutet ist. Diese Wartungsarbeiten erfolgen bei leerem Reaktor, d.h. ohne Vorhandensein eines Wirbelbettes (3). Ist das Rohr (5a) um 180° gegenüber der Darstellung in Figur 3 gedreht, so weist die Düse (6) nach unten und kann von einer unterhalb des Rohrs (5a) befindlichen Bedienungsperson leicht erreicht werden, um die Düse z.B. zu reinigen oder auszuwechseln. Durch die Abdichtung (17) wird dieses Drehen des Rohres (5a) nicht behindert.

## Patentansprüche

1. Wirbelschichtreaktor mit einem im unteren Bereich des Reaktorgehäuses angeordneten Düsenrost zum Einführen von Fluidisierungsmedium in den Reaktor, wobei der Düsenrost mehrere, etwa horizontal verlaufende Rohre mit Düsen für den Durchtritt des Fluidisierungsmediums aufweist, zu einem Rohr mindestens eine Öffnung im Reaktorgehäuse gehört und mit der Öffnung ein das Rohr umgebender Rohrstutzen verbunden ist, mit welchem das Rohr lösbar verbunden ist und der das Rohr stützt, wenn man es um seine Längsachse dreht, dadurch gekennzeichnet, daß die Düsen mit den zugehörigen Rohren durch Verschrauben lösbar verbunden sind und der Bereich des Reaktors unterhalb der Rohre bis zu den Düsen für eine Bedienungsperson bei abgeschaltetem Betrieb in solcher Weise zugänglich ausgebildet ist, daß bei um die Längsachse gedrehten Rohren und dabei nach unten gedrehten Düsen die Düsen für eine unterhalb der Rohre befindliche Bedienungsperson leicht erreichbar sind.

## Claims

1. A fluidised-bed reactor having a nozzle grate arranged in the lower region of the reactor housing for introducing fluidising medium into the reactor, the jet bank having a plurality of pipes extending approximately horizontally with nozzles for the fluidising medium to pass through, at least one opening in the reactor housing belonging to a pipe, and a pipe socket surrounding the pipe being connected to the opening, to which socket the pipe is detachably connected and which socket supports the pipe when it is rotated about its longitudinal axis, characterized in that the nozzles are detachably connected to the associated pipes by screwing and the region of the reactor beneath the pipes up to the nozzles is designed to be accessible to an operator when the reactor is not in operation such that when the pipes have been rotated about their longitudinal axis and the nozzles are turned downwards, the nozzles are easily accessible for an operator disposed beneath the pipes.

## Revendications

1. Réacteur à lit fluidisé comportant une grille de buses disposée dans la région inférieure de la cuve du réacteur pour l'introduction d'agent de fluidisation dans le réacteur, la grille de buse comportant plusieurs conduits s'étendant sensiblement horizontalement et munis de buses pour le passage de l'agent de fluidisation, un conduit ayant au moins une ouverture dans la cuve de réacteur et une tubulure entourant le conduit étant reliée à l'ouverture, le conduit étant relié à la tubulure de manière amovible, et celle-ci supportant le conduit lorsqu'on le fait tourner par rapport à son axe longitudinal, caractérisé en ce que les buses sont reliées à leurs conduits associés de manière amovible par vissage et la région du réacteur en dessous des conduits est formée de manière à être accessible à un utilisateur jusqu'aux buses lorsque le fonctionnement est arrêté, de manière à ce qu'un utilisateur se trouvant en-dessous des tubes puisse atteindre facilement les buses lorsque les conduits sont tournés par rapport à l'axe longitudinal et ainsi les buses sont tournées vers le bas.
